# EUROPÄISCHE PATENTSCHRIFT

(11) **EP 2 213 486 B1**
(45) Veröffentlichungstag und Bekanntmachung des Hinweises auf die Patenterteilung: **25.05.2011**
(21) Anmeldenummer: 10150406.6
(22) Anmeldetag: 11.01.2010
(51) Int. Cl.: B60G 5/02, B60G 17/052, B60G 17/016

(54) **Kraftfahrzeug, insbesondere militärisches Kraftfahrzeug**
Motor vehicle, in particular military motor vehicle
Véhicule automobile, notamment véhicule automobile militaire

(30) Priorität: 29.01.2009 DE 102009006679
(43) Veröffentlichungstag der Anmeldung: 04.08.2010
(73) Patentinhaber: Krauss-Maffei Wegmann GmbH & Co. KG, 80997 München (DE)
(72) Erfinder: Lehmann, Christoph, 85250, Altomünster (DE)
(74) Vertreter: Feder Walter Ebert

(56) Entgegenhaltungen:
- EP-A1- 1 203 676
- EP-A2- 1 484 203
- JP-A- 7 069 033
- JP-A- 7 205 627
- JP-A- 8 118 936
- JP-A- 8 127 216
- JP-A- 8 197 928
- JP-A- 10 157 431
- JP-A- 10 324 135
- JP-A- 11 278 037
- JP-A- 11 291 734
- US-A- 2 864 453
- US-A- 3 920 283

## Beschreibung

Die Erfindung betrifft ein Kraftfahrzeug, insbesondere ein militärisches Kraftfahrzeug, mit den Merkmalen aus dem Oberbegriff des Patentanspruchs 1.

Derartige Kraftfahrzeuge sind allgemein bekannt. Insbesondere bei militärischen Kraftfahrzeugen besteht die Forderung, dass die Fahrzeuge sehr steile Steigungen von bis zu 60 % bewältigen müssen. Bei vielen Fahrzeugen erzeugt der Aufbau und die Beladung einen in Relation zum Radstand hoch liegenden Schwerpunkt. Bei einer Beschleunigung in Längsrichtung am Steilhang, beispielsweise durch Anfahren oder Rückwärtsrollen mit Bremsung, wird die Vorderachse des Fahrzeugs durch die im Hang verstärkte dynamische Achslastverteilung sehr stark entlastet und kann dadurch den Bodenkontakt verlieren. Dies führt zu einer starken Einschränkung der Lenkfähigkeit des Fahrzeugs. Im Extremfall kann eine Lenkung unmöglich werden.

Relevante Einrichtungen zur Beeinflussung der Kippbewegungen von Kraftfahrzeugen gemäß dem Oberbegriff des Anspruchs 1 sind aus den Dokumenten US 3920 283, JP 07 205 627, JP 10157431, JP08118936, EP1203676, JP11291734 und JP07069033 bekannt.

Der Erfindung liegt die Aufgabe zugrunde, bei einem Kraftfahrzeug mit den Merkmalen aus dem Oberbegriff des Patentanspruchs 1 eine Möglichkeit zu schaffen, die beim Anfahren am Steilhang auftretende Entlastung der Vorderachse des Fahrzeugs zu verhindern. Die entsprechende Einrichtung sollte automatisch, also ohne notwendige Einschaltung durch den Fahrer und möglichst rasch wirksam werden.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Ein Grundgedanke der Erfindung besteht darin, das Fahrzeug mit einer Einrichtung zur Sperrung von Kippbewegungen des Fahrzeugrahmens um die Pendelachse auszurüsten, wobei diese Einrichtung insgesamt so ausgebildet ist, dass sie automatisch die Neigung des Fahrzeugrahmens in Längsrichtung gegenüber der Horizontalen erkennt und beim Überschreiten eines vorgegebenen Neigungswinkels innerhalb eines sehr kurzen Zeitraums eine Sperrung der oben erwähnten Kippbewegungen bewirkt.

Diese Sperrung kann wieder gelöst werden, wenn der vorgegebene. Neigungswinkel wieder unterschritten wird. Er kann auch nach einem vorgegebenen Zeitablauf wieder gelöst werden. Die Sperrung der Kippbewegungen kann durch einen auf der Längsmittelachse des Fahrzeugs am Fahrzeugrahmen angeordneten Luftfederbalg erfolgen, der sich auf der durchgehenden zweiten Hinterachse abstützt. Der Luftfederbalg kann über ein als Magnetventil ausgebildetes Füllventil, das von einem Steuergerät angesteuert wird, mit einer Druckluftquelle verbunden werden, so dass der Luftfederbalg ausfährt und die Sperrung bewirkt. Beim Lösen der Sperrung kann der Luftfederbalg über ein ebenfalls als Magnetventil ausgebildetes Ablassventil, das vom Steuergerät angesteuert wird, mit dem Außenraum verbunden werden.

Grundsätzlich kann die Einrichtung so ausgebildet sein, dass die Steuerung bzw. Sensierung ständig eingeschaltet ist und beim Einfahren des Fahrzeugs in eine Steigung die Sperrung bewirkt, es ist aber auch möglich, dass am Fahrerplatz eine Schaltvorrichtung angeordnet ist, von der aus die Einrichtung vor dem Einfahren in eine Steigung in einen Bereitschaftszustand geschaltet werden kann.

Im Folgenden wird anhand der beigefügten Zeichnungen ein Ausführungsbeispiel für ein Kraftfahrzeug mit einer Einrichtung zur Sperrung von Kippbewegungen des Fahrzeugrahmens um die Pendelachse näher erläutert.

In den Zeichnungen zeigen:
- Fig. 1: in einer stark schematisierten Seitenansicht ein dreiachsiges Kraftfahrzeug nach dem Stand der Technik ohne Einrichtung zur Sperrung von Kippbewegungen des Fahrzeugrahmens;
- Fig. 2: in einer Darstellung analog Fig. 1 ein dreiachsiges Kraftfahrzeug nach der Erfindung.
- Fig. 3: eine Teilaufsicht auf den Fahrzeugrahmen eines Kraftfahr- zeugs gemäß Fig. 2;
- Fig. 3 A: einen Schnitt nach der Linie A-A in Fig. 3;
- Fig. 3 B: in gegenüber Fig. 3 vergrößerter Darstellung den Bereich B in Fig. 3;
- Fig. 4: in perspektivischer vergrößerter Darstellung die zweite Hinter- achse des Kraftfahrzeug nach Fig. 3;
- Fig. 5: in einem Schaltbild den Druckluftkreis für den Luftfederbalg der Einrichtung zur Sperrung von Kippbewegungen des Fahrzeug- rahmens bei dem Fahrzeug nach den Figuren 2, 3 und 4.

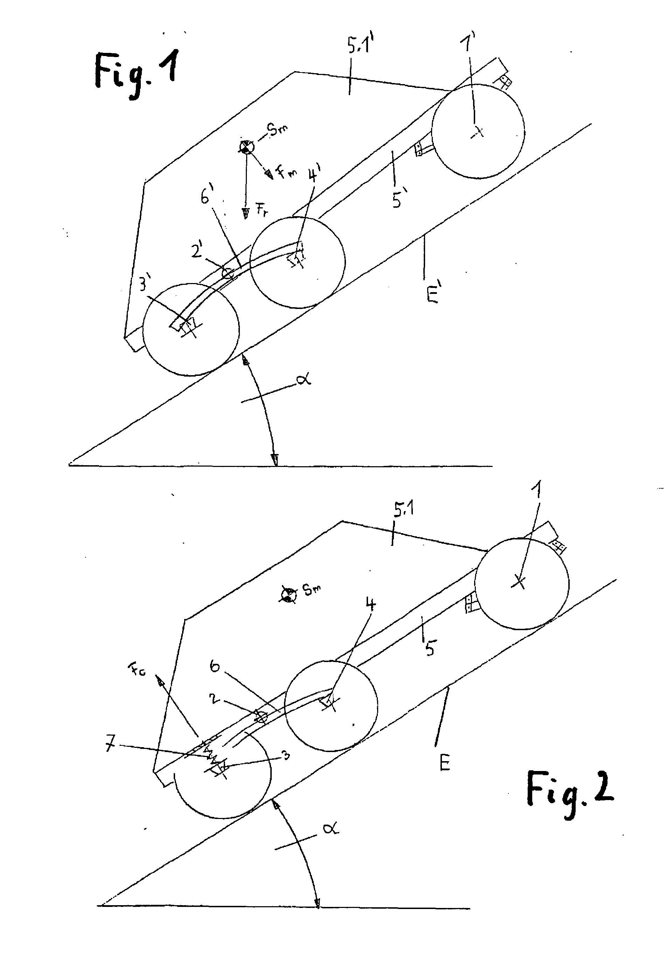

Es wird zunächst anhand von Fig. 1 ein dreiachsiges Kraftfahrzeug beschrieben, das ohne eine Einrichtung zur Sperrung von Kippbewegungen des Fahrzeugrahmens zu besitzen in einen Steilhang mit dem Steigungswinkel α eingefahren ist.

Das Fahrzeug besitzt einen Fahrzeugrahmen 5', der das Fahrzeuggehäuse 5.1' trägt und an dem in der üblichen Weise eine Vorderachse 1' sowie eine erste Hinterachse 4' und eine zweite Hinterachse 3' angeordnet sind. Die Hinterachsen 3' und 4' sind als übliches Doppelachsaggregat ausgebildet und sind auf jeder Fahrzeugseite mittels einer gemeinsamen Blattfeder 6' um eine mittig zwischen ihnen in Querrichtung verlaufende am Fahrzeugrahmen 5' abgestützte Pendelachse 2' federnd aufgehängt. Das Fahrzeug besitzt einen relativ hoch liegenden Schwerpunkt Sₘ, in dem die Gewichtskraft aus Fᵣ angreift, welche eine zum Erdboden E' ausgerichtete Kraftkomponente Fₘ besitzt, die das Fahrzeug auf dem Erdboden E' hält.

Durch eine Beschleunigung in Längsrichtung, also beispielsweise durch Anfahren entsteht eine dynamische Achslastverteilung aufgrund der am Fahrzeugrahmen 5' ein Drehmoment um die Pendelachse 2' hervorgerufen wird, das zu einer Kippbewegung des Fahrzeugrahmens 5' um die Pendelachse 2' führt, was zur Folge hat, dass die Räder der Vorderachse 1' vom Erdboden E' abheben und so eine Lenkung des Fahrzeugs unmöglich wird.

In Fig. 2 ist ein Kraftfahrzeug dargestellt, das grundsätzlich genauso aufgebaut ist wie das Kraftfahrzeug nach Fig. 1 und somit einen das Fahrzeuggehäuse 5.1 tragenden Fahrzeugrahmen 5 aufweist, an dem die Vorderachse 1, die erste Hinterachse 4 und die zweite Hinterachse 3 angeordnet sind. Auch hier sind die Hinterachsen als Doppelachsaggregat ausgebildet und mittels der gemeinsamen Blattfeder 6 um die Pendelachse 2 federnd aufgehängt.

Auch dieses Fahrzeug steht an einem Steilhang mit dem Neigungswinkel α.

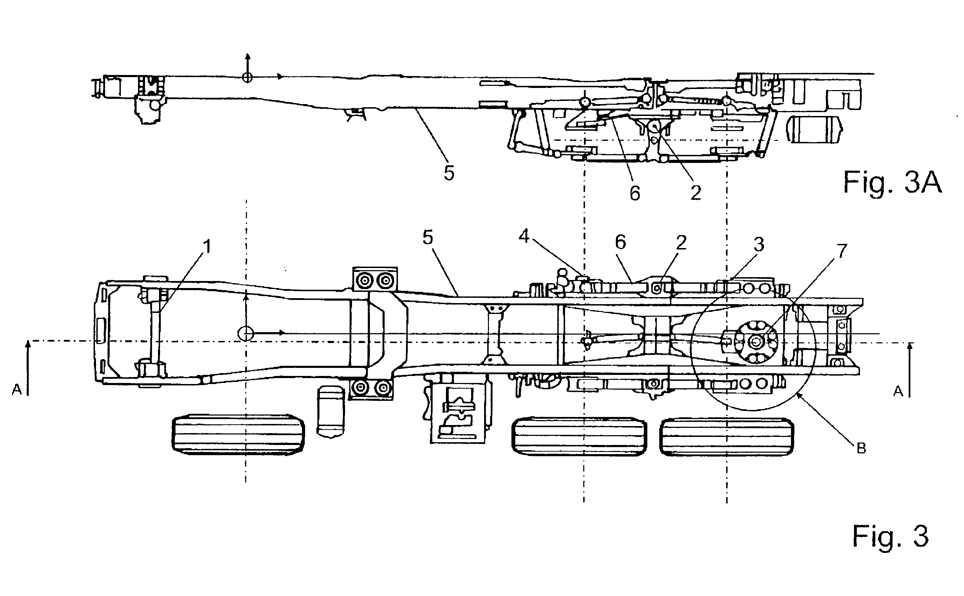

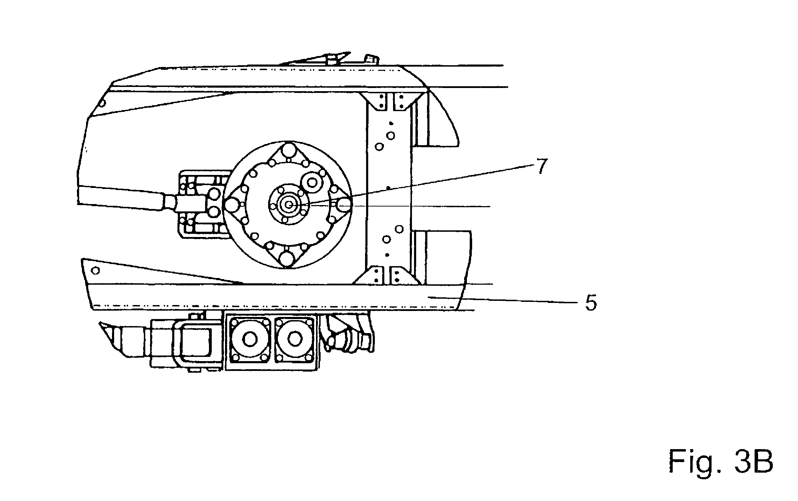

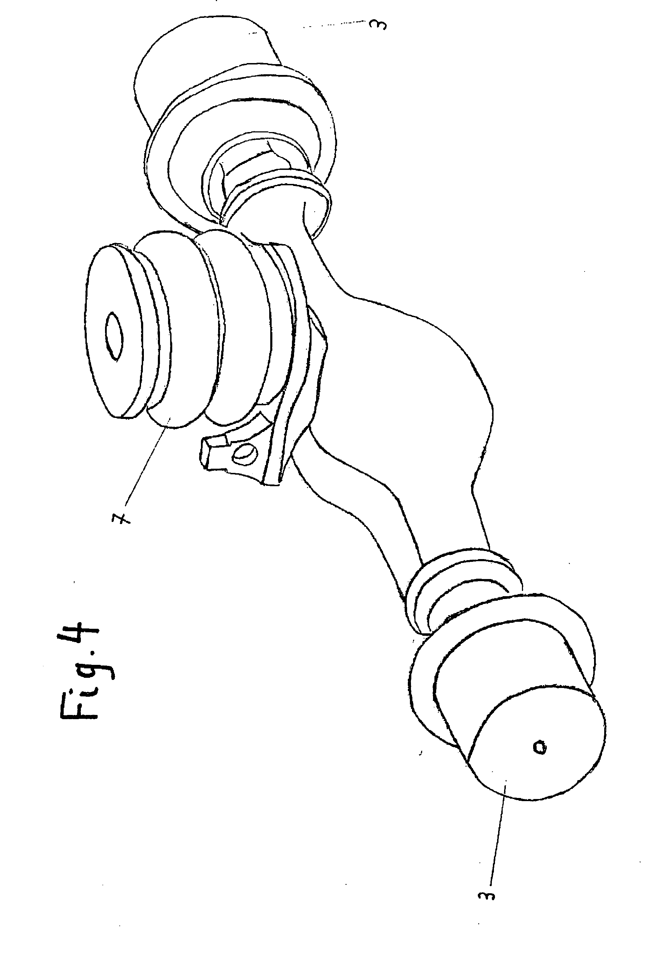

Weitere Einzelheiten dieses Fahrzeugs sind aus den Figuren 3, 3A, 3B, 4 und 5 zu entnehmen.

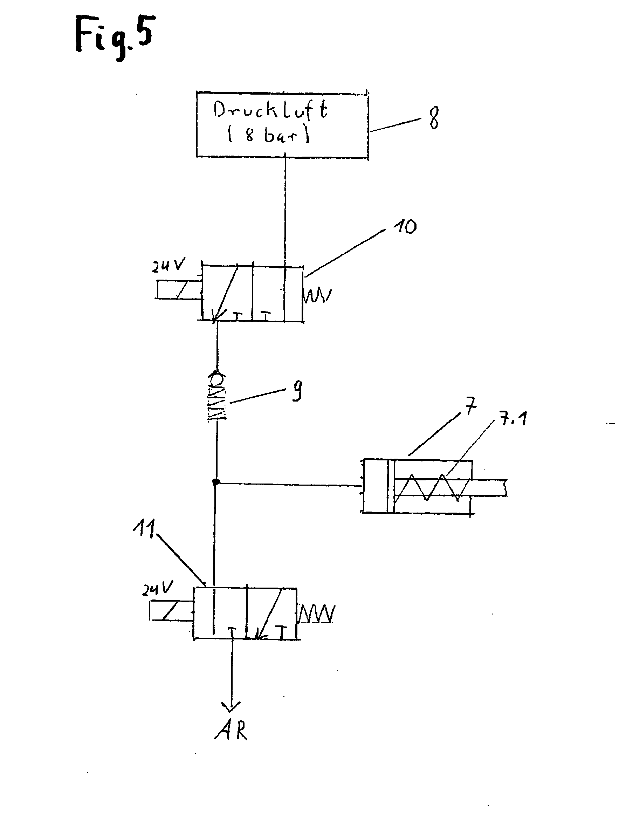

Zwischen der zweiten Hinterachse 3 und dem Fahrzeugrahmen 5 ist auf der Längsmittelachse des Fahrzeugrahmens 5 ein Luftfederbalg 7 installiert, und zwar so, dass bei eingefahrenem Luftfederbalg 7 eine Kippbewegung des Fahrzeugrahmens 5 um die Pendelachse 2 möglich ist. Wie Fig. 5 schematisch zeigt, ist der Luftfederbalg 7 einerseits über ein Rückschlagventil 9 und ein als Magnetventil ausgebildetes Füllventil 10 mit einer Druckluftquelle 8 und andererseits über ein als Magnetventil ausgebildetes Ablassventil 11 mit dem Außenraum AR verbindbar. Die Ansteuerung der beiden Magnetventile 10 und 11 erfolgt von einem nicht dargestellten elektrischen Steuergerät grundsätzlich bekannter Bauart aus. Das Steuergerät enthält eine Einrichtung, die die Neigung des Fahrzeugrahmens 5 in Längsrichtung gegenüber der Horizontalen erkennt. Beim Überschreiten eines vorgegebenen Neigungswinkels erzeugt das Steuergerät ggf. unter Mitverarbeitung von aus der Antriebssteuerung des Fahrzeugs abgerufenen Auslöse- und Kontrollgrößen wie z.B. Beschleunigung in der Horizontalen, v-Signal, Motormoment etc.... ein elektrisches Signal, durch welches das Füllventil 10 geöffnet wird, wodurch der Luftfederbalg 7 an die Druckluftquelle 8 angeschlossen wird und ausfährt. Im ausgefahrenen Zustand blockiert der zwischen der zweiten Hinterachse 3 und dem Fahrzeugrahmen 5 angeordnete Luftfederbalg 7 jede Kippbewegung des Fahrzeugrahmens um die Pendelachse 2.

Beim Unterschreiten eines vorgegebenen Neigungswinkels oder nach Ablauf eines vorgegebenen Zeitraums gibt das elektrische Steuergerät ein Signal ab, das dem Ablassventil 11 zugeführt wird und dieses öffnet. Dies hat zur Folge, dass der Luftfederbalg 7 unter der Wirkung eines Rückhaltefederelements 7.1 über das Ablassventil 11 mit dem Außenraum AR verbunden wird und die Druckluft abgegeben wird, so dass der Luftfederbalg 7 wieder einfährt und Kippbewegungen des Fahrzeugrahmens 5 um die Pendelachse 2 wieder möglich werden. Das Rückhaltefederelement 7.1 stellt sicher, dass der Luftfederbalg nicht aufgrund seines Eigengewichtes ausfahren kann.

Wie Fig. 2 illustriert, steht das Fahrzeug nach dem Ausfahren des Luftfederbalgs 7 auch mit den Rädern der Vorderachse 1 fest auf dem Erdboden E und bleibt somit lenkfähig.

## Patentansprüche

1. Kraftfahrzeug, insbesondere militärisches Kraftfahrzeug, mit einer Vorderachse und zwei Hinterachsen, wobei die Hinterachsen auf jeder Fahrzeugseite mittels eines gemeinsamen Pendelelements um eine mittig zwischen ihnen in Querrichtung verlaufende, am Fahrzeugrahmen abgestützte Pendelachse federnd aufgehängt sind, **gekennzeichnet durch** eine Einrichtung zur Sperrung von Kippbewegungen des Fahrzeugrahmens (5) um die Pendelachse (2) mit mindestens einem zwischen dem Fahrzeugrahmen (5) und der zweiten Hinterachse (3) angeordneten Luftfederbalg, der über ein ansteuerbares Füllventil (10) mit einer Druckluftquelle (8) verbindbar ist, wobei das Füllventil (10) von einem Steuergerät aus ansteuerbar ist, das eine Neigung des Fahrzeugrahmens (5) in Längsrichtung gegenüber der Horizontalen erkennt und beim Überschreiten eines vorgegebenen Neigungswinkels automatisch das Füllventil öffnet.

2. Kraftfahrzeug nach Anspruch 1, **dadurch gekennzeichnet, dass** das Pendelelement als den beiden Hinterachsen gemeinsame Blattfeder (6) ausgebildet ist.

3. Kraftfahrzeug nach Anspruch 1 oder 2, **gekennzeichnet durch** ein vom Steuergerät ansteuerbares Ablassventil (11), über welches der Luftfederbalg (7) mit dem Außenraum (AR) verbindbar ist, und das beim Unterschreiten eines vorgegebenen Neigungswinkels oder nach Ablauf eines vorgegebenen Zeitraums automatisch geöffnet wird.

4. Kraftfahrzeug nach einem der Ansprüche 1 bis 3, **gekennzeichnet durch** nur einen auf der Längsmittelachse des Fahrzeugrahmens (5) angeordneten und sich auf der durchgehenden zweiten Hinterachse (3) abstützenden Luftfederbalg (7).

5. Kraftfahrzeug nach Anspruch 3 oder 4, **dadurch gekennzeichnet, dass** das Füllventil (10) und das Ablassventil (11) als Magnetventile ausgebildet sind, die von einem elektrischen Steuergerät angesteuert werden.

6. Kraftfahrzeug nach einem der Ansprüche 1 bis 5, **dadurch gekennzeichnet, dass** das Steuergerät von einer am Fahrerplatz des Fahrzeugs angeordneten Schaltvorrichtung aus in einen Bereitschaftszustand schaltbar ist.

7. Kraftfahrzeug nach einem der Ansprüche 1 bis 6, **dadurch gekennzeichnet, dass** der Luftfederbalg (7) mit einem gegen die Ausfederrichtung wirkenden Rückhaltefederelement (7.1) versehen ist.

## Claims

1. Motor vehicle, in particular a military motor vehicle, having a front axle and two rear axles, wherein the rear axles at each vehicle side are suspended by means of a common swing element so as to spring about a swing axle, which extends in transverse direction midway between them and is supported on the vehicle frame, **characterized by** a device for blocking tilting movements of the vehicle frame (5) about the swing axle (2) comprising at least one pneumatic cushioning bellows, which is disposed between the vehicle frame (5) and the second rear axle (3) and connectable by a controllable filling valve (10) to a compressed-air source (8), wherein the filling valve (10) is controllable from a control unit that detects an inclination of the vehicle frame (5) in longitudinal direction relative to the horizontal and, if a preset angle of inclination is exceeded, automatically opens the filling valve.

2. Motor vehicle according to claim 1, **characterized in that** the swing element takes the form of a leaf spring (6) that is common to the two rear axles.

3. Motor vehicle according to claim 1 or 2, **characterized by** a discharge valve (11), which is controllable from the control unit and by which the pneumatic cushioning bellows (7) is connectable to the outside space (AR) and which is automatically opened if the angle of inclination falls below a preset angle of inclination or after a preset period of time has elapsed.

4. Motor vehicle according to one of claims 1 to 3, **characterized by** only one pneumatic cushioning bellows (7) that is disposed on the longitudinal centre line of the vehicle frame (5) and supported on the continuous second rear axle (3).

5. Motor vehicle according to claim 3 or 4, **characterized in that** the filling valve (10) and the discharge valve (11) take the form of solenoid valves that are controlled from an electric control unit.

6. Motor vehicle according to one of claims 1 to 5, **characterized in that** the control unit may be switched to a standby state by a switching apparatus disposed at the position of the driver of the vehicle.

7. Motor vehicle according to one of claims 1 to 6, **characterized in that** the pneumatic cushioning bellows (7) is provided with a retaining spring element (7.1) that acts counter to the rebound direction.

## Revendications

1. Véhicule automobile, notamment véhicule automobile militaire, comprenant un essieu avant et deux essieux arrière, les essieux arrière étant suspendus élastiquement de chaque côté du véhicule au moyen d'un élément pendulaire commun autour d'un axe pendulaire s'étendant au milieu entre ceux-ci dans le sens transversal, en appui contre le châssis du véhicule, **caractérisé par** un dispositif servant à bloquer les mouvements de basculement du châssis du véhicule (5) autour de l'axe pendulaire (2), présentant au moins un soufflet pneumatique disposé entre le châssis du véhicule (5) et le second essieu arrière (3), qui peut être relié par une soupape de remplissage (10) pouvant être commandée à une source d'air comprimé (8), la soupape de remplissage (10) pouvant être commandée par un appareil de commande qui détecte une inclinaison du châssis du véhicule (5) dans le sens longitudinal par rapport à l'horizontale et ouvre automatiquement la soupape de remplissage en cas de dépassement d'un angle d'inclinaison prescrit.

2. Véhicule automobile selon la revendication 1, **caractérisé en ce que** l'élément pendulaire est réalisé comme un ressort à lame (6) commun aux deux essieux arrière.

3. Véhicule automobile selon la revendication 1 ou 2, **caractérisé par** une soupape d'évacuation (11) pouvant être commandée par l'appareil de commande, laquelle peut relier le soufflet pneumatique (7) à l'espace extérieur (AR) et est automatiquement ouverte en cas de non atteinte d'un angle d'inclinaison prescrit ou à la fin d'une période prescrite.

4. Véhicule automobile selon l'une quelconque des revendications 1 à 3, **caractérisé par** un seul soufflet pneumatique (7) disposé sur l'axe médian longitudinal du châssis du véhicule (5) et s'appuyant contre le second essieu arrière continu (3).

5. Véhicule automobile selon la revendication 3 ou 4, **caractérisé en ce que** la soupape de remplissage (10) et la soupape d'évacuation (11) sont réalisées comme des électrovannes commandées par un appareil de commande électrique.

6. Véhicule automobile selon l'une quelconque des revendications 1 à 5, **caractérisé en ce que** l'appareil de commande peut être commuté par un dispositif de commutation disposé à la place du conducteur du véhicule dans un état de disponibilité.

7. Véhicule automobile selon l'une quelconque des revendications 1 à 6, **caractérisé en ce que** le soufflet pneumatique (7) est pourvu d'un élément de ressort de retenue (7.1) agissant dans le sens inverse du débattement.
